# EUROPÄISCHE PATENTSCHRIFT

(11) **EP 3 126 162 B1**
(45) Veröffentlichungstag und Bekanntmachung des Hinweises auf die Patenterteilung: **13.12.2017**
(21) Anmeldenummer: 15708178.7
(22) Anmeldetag: 02.03.2015
(51) Int. Cl.: B60C 23/04, B29D 30/00

(54) **SENSORGEHÄUSE ZUR MONTAGE IN EINEM FAHRZEUGRAD**
SENSOR HOUSING FOR MOUNTING IN A VEHICLE WHEEL
BOÎTIER DE CAPTEUR DESTINÉ À ÊTRE MONTÉ DANS UNE ROUE DE VÉHICULE

(30) Priorität: 03.04.2014 DE 102014206463
(43) Veröffentlichungstag der Anmeldung: 08.02.2017
(73) Patentinhaber: Bayerische Motoren Werke Aktiengesellschaft, 80809 München (DE)
(72) Erfinder: HARTMANN, Jochen, 86415 Mering (DE); SCHUMACHER, Hubert, 86179 Augsburg (DE)
(86) Internationale Anmeldenummer: PCT/EP2015/054322
(87) Internationale Veröffentlichungsnummer: WO 2015/150004

(56) Entgegenhaltungen:
- EP-A2- 0 694 861
- WO-A1-2014/041060
- DE-A1-102011 003 134

## Beschreibung

Die Erfindung betrifft ein Sensorgehäuse zur Montage in einem Fahrzeugrad, vorzugsweise in einem Kraftfahrzeugrad. Das Sensorgehäuse wird insbesondere im Reifen des Rades montiert. Das Sensorgehäuse dient zur Aufnahme eines Sensors. Des Weiteren betrifft die Erfindung eine Anordnung umfassend das Sensorgehäuse und einen Sensor. In modernen Kraftfahrzeugen sind Reifendruckkontrollsysteme verbaut, um den Fahrer z.B. bei Druckabfall zu warnen. In jedem Reifen ist dabei ein Sensor eingebracht, der Druck und gegebenenfalls Temperatur messen kann und diese Informationen zusammen mit einer eindeutigen Sensor ID ans Fahrzeug übermittelt, wo diese Informationen weiterverarbeitet werden können. Über Zuordnung der Sensor ID zu einer Radposition kann die übermittelte Information radspezifische ausgewertet werden. Verfahren zur Erkennung eigener Sensoren und deren Zuordnung zur Radposition sind bekannt und verfügbar. Die Übermittlung von Informationen vom Rad zum Fahrzeug wird mittels standardisierten Funktelegrammen durchgeführt. Der Empfang erfolgt mit einer Antenne und die Verarbeitung der Information erfolgt in einem Steuergerät.
Bei den Sensoren unterscheidet man zwischen felgenseitig und reifenseitig montierten Sensoren. Felgenseitig montierte Sensoren sind nicht mit dem Reifen verbunden und damit kann der Reifen gewechselt werden ohne, dass der Sensor mitgewechselt wird. Die Reifeninformationen, die im Sensor gespeichert sind, sind damit nicht eindeutig. Reifenseitig montierte Sensoren werden im Reifenlatsch befestigt und sind damit eindeutig mit dem Reifen

verbunden. Damit kann eine reifenseitige Information ans Fahrzeug übermittelt werden Die Sensoren werden mittels einer Gummihalterung im Reifen gehalten. Bei den Gummihalterungen unterscheidet man Systeme, bei denen die Halterung und der Sensor getrennt voneinander angebracht werden können: Die Halterung kann im Reifenlatsch in einem Arbeitsschritt befestigt werden und in einem zweiten Arbeitsschritt wird der Sensor mittels eines Spezialwerkzeugs in die Halterung eingebracht. Der zweite Arbeitsschritt kann dabei unmittelbar nach der Anbringung der Halterung erfolgen oder aber zeitlich und räumlich vollkommen unabhängig, in jedem Fall allerdings vor der Montage des Reifens auf die Felge. Das zweite System sieht vor, dass der Sensor und die Halterung derart konstruiert sind, dass der Sensor bei Befestigung der Halterung im Reifenlatsch bereits mit eingebracht wird. Damit ist eine räumliche und zeitliche Trennung von Halterung- und Sensormontage nicht möglich. In beiden Fällen muss bei der Entsorgung des Reifens aus Umweltschutzgründen der Sensor vom Reifen getrennt werden. Aktuell werden die Sensoren mit Messern herausgeschnitten oder im Falle von zweistufigen Montagekonzepten unter Zuhilfenahme von Schraubenziehern oder anderen ungeeigneten Werkzeugen entfernt. Die Druckschriften EP 0 694 861 A1, WO 2014 041060 A1 und DE 10 2011 003134 A1 stellen vorbekannten Stand der Technik dar.
Es ist Aufgabe vorliegender Erfindung, ein Sensorgehäuse zur Montage in einem Fahrzeugrad anzugeben, das zur Aufnahme eines Sensors einfach montiert werden kann, wobei die Demontage des Sensors möglichst einfach und in einem reproduzierbaren Arbeitsschritt durchführbar sein soll. Des Weiteren ist es Aufgabe der vorliegenden Erfindung, eine Anordnung mit dem Sensor und dem Gehäuse anzugeben. Die Lösung der Aufgabe erfolgt durch die unabhängigen Ansprüche. Die abhängigen Ansprüche haben vorteilhafte Ausgestaltungen der Erfindung zum Gegenstand. Somit wird die Aufgabe gelöst durch ein Sensorgehäuse. Dieses Sensorgehäuse ist zur Montage in einem Fahrzeugrad, vorzugsweise an einem Reifen, ausgebildet. Insbesondere handelt es sich dabei um ein Kraftfahrzeugrad. Das Sensorgehäuse weist eine Grundfläche zum Befestigen des Sensorgehäuses im Innenraum des Rades auf. Des Weiteren umfasst das Sensorgehäuse einen Aufnahmebereich mit einer Aussparung. In diese Aussparung kann der Sensor eingesetzt werden. Der Aufnahmebereich weist zumindest eine Sollbruchstelle auf. Diese Sollbruchstelle dient zum Aufbrechen des Aufnahmebereichs und somit zum Lösen des Sensors aus dem Aufnahmebereich. Der Sensor dient vorzugsweise zum Druckmessen und/oder Temperaturmessen und/oder Messen eines Verschleißes. Bei dem Sensor handelt es sich insbesondere um einen direkt messenden Sensor. Der Sensor misst also direkt zum Beispiel den Luftdruck und überträgt diese Daten per Funk an das Fahrzeug. Durch die Verwendung der Sollbruchstelle kann der Sensor, insbesondere ohne Verwendung eines Werkzeuges, aus dem Sensorgehäuse wieder gelöst werden. Gleichzeitig ergibt sich der Vorteil, dass durch Aufbrechen an der Sollbruchstelle das Sensorgehäuse zerstört wird und somit nicht mehr unsachgemäß weiterverwendet werden kann. Bei vorbekannten Systemen war stets das Problem, dass bei der Demontage des Sensors aufgrund fehlender Standardisierung das Ergebnis nicht sichergestellt bzw. reproduzierbar war. Dies liegt daran, dass bei diesen Systemen der Sensor mit undefinierten Werkzeugen herausgelöst wird. Das erfindungsgemäße Sensorgehäuse ermöglicht es nun, je nach Anwendungsfall den Sensor zerstörungsfrei zu lösen und wiederzuverwenden (beispielsweise für einen Reifentausch) oder aber den Sensor definiert herauszulösen und einem sicheren Zerstörungsvorgang zuzuführen. Darüber hinaus wird durch die Sollbruchstelle das Sensorgehäuse vollständig zerstört und es kann nicht zur erneuten Verwendung des Sensorgehäuses kommen. Bei den vorbekannten Systemen bestand nämlich das Problem, dass bei dem Herauslösen der Sensoren mit undefinierten Werkzeugen die Gehäuse bzw. Halterungen teilweise zerstört wurden und wiederverwendet wurden. Dies führte zum Teil zu fehlerhaft montierten Sensoren. Erfindungsgemäß wird die Sollbruchstelle durch eine Materialverjüngung im Aufnahmebereich gebildet ist. Dadurch ist ein leichtes Aufbrechen des Aufnahmebereichs möglich.

Des Weiteren ist bevorzugt vorgesehen, dass der Aufnahmebereich derart zur Aufnahme des Sensors ausgebildet ist, dass der Sensor nur durch Zerstören, vorzugsweise Aufbrechen, des Sensorgehäuses, entnehmbar ist. Letztendlich kann hierfür der Sensor vom Sensorgehäuse vollständig umschlossen sein, oder aber die Sollbruchstelle muss derart labil sein, sodass jeder Versuch zur unsachgemäßen Entfernung des Sensors zum Bruch des Aufnahmebereichs führt.

Insbesondere ist vorgesehen, dass an der Sollbruchstelle eine Lasche am Aufnahmebereich ausgebildet ist. Die Lasche ist derart ausgebildet, dass durch Ziehen an der Lasche der Aufnahmebereich an der Sollbruchstelle aufbricht. Somit ist ein einfaches, werkzeugloses Auslösen des Sensors möglich.

In einer ersten Variante ist diese Lasche ein integraler Bestandteil des Aufnahmebereichs. Insbesondere bei Herstellung des Sensorgehäuses oder des Aufnahmebereichs aus Kunststoff, kann solch eine vom Aufnahmebereich abstehende Lasche gebildet werden.

In der zweiten Variante ist vorgesehen, dass entlang der Sollbruchstelle ein Faden oder ein Riemen in den Aufnahmebereich eingelegt ist, wobei dann ein Ende des Fadens oder des Riemens diese Lasche bildet.

Das Sensorgehäuse wird bevorzugt aus Kunststoff hergestellt, dabei ist insbesondere vorgesehen, dass der Aufnahmebereich und die Grundfläche gemeinsam ein einstückiges Bauteil bilden. Dadurch ist eine einfache und kostengünstige Herstellung gegeben.

An der Grundfläche ist insbesondere ein Klebstoff zum Einkleben des Sensorgehäuses in das Fahrzeugrad, vorzugsweise in den Reifen, vorgesehen. Alternativ zum Einkleben kann das Sensorgehäuse auch in den Reifen vulkanisiert werden.

Für die Ausbildung der Aussparung zum Einführen des Sensors sind zwei Möglichkeiten bevorzugt vorgesehen: In der ersten Möglichkeit durchbricht die Aussparung die Grundfläche. Der Sensor wird also von unten in das Sensorgehäuse eingeschoben. Daraufhin wird das Sensorgehäuse mit seiner Grundfläche im Rad befestigt. Dadurch verschließt das Rad, insbesondere der Reifenlatsch, die Aussparung und der Sensor kann nicht mehr ohne Zerstören des Sensorgehäuses entnommen werden. Gemäß der zweiten Möglichkeit ist vorgesehen, dass sich die Aussparung nach oben öffnet und unten durch die Grundfläche verschlossen ist. In diesem Fall muss sichergestellt werden, dass der Sensor zwar durch die nach oben offene Aussparung einschiebbar ist, jedoch in der Aussparung kraft-, form- oder stoffschlüssig befestigt ist, sodass auch in diesem Fall nur durch Zerstören des Sensorgehäuses eine Entnahme des Sensors möglich ist. Hierfür ist insbesondere vorgesehen, dass am Aufnahmebereich zumindest ein Rastelement zum formschlüssigen Halten des Sensors in der Aussparung ausgebildet ist. Zusätzlich oder alternativ ist es möglich, den Aufnahmebereich zumindest stellenweise elastisch und die Aussparung entsprechend eng auszubilden, um den Sensor kraftschlüssig in der Aussparung zu halten. Des Weiteren wird ein Sensor zur Verwendung mit einem Sensorgehäuse nach einem der vorhergehenden Ansprüche beschrieben. Der Sensor dient vorzugsweise zum Druckmessen und/oder Temperaturmessen und/oder Messen eines Verschleißes. Der Sensor ist vorzugsweise durch eine integrierte Erfassungseinheit gekennzeichnet. Diese Erfassungseinheit ist Bestandteil des Sensors und ist dazu ausgebildet, wenn der Sensor in das Gehäuse eingesteckt ist, ein Aufbrechen des Aufnahmebereichs zu erfassen. Die im Sensor gespeicherten Daten sind üblicherweise reifenspezifisch. So sollte sichergestellt werden, dass nach Trennung des Sensors vom Reifen die Daten gelöscht werden. Hierzu dient die Erkennung des Aufbrechens des Aufnahmebereichs. Dazu gibt es verschiedene Veränderungsvorgänge, die von der Erfassungseinheit erfasst werden können:
Bevorzugt ist vorgesehen, dass die Erfassungseinheit dazu ausgebildet ist, beim Aufbrechen des Aufnahmebereichs ein Öffnen eines elektrischen Kontaktes, insbesondere eines Stromkreises, zu detektieren, oder eine resistive Veränderung eines Widerstandes zu erfassen, oder eine kapazitive Veränderung eines Kondensators zu erfassen, oder eine pneumatische Veränderung zu erfassen, oder eine optische Veränderung zu erfassen. Bei der optischen Veränderung fällt beispielsweise durch Aufbrechen des Sensorgehäuses Licht auf eine Fotozelle der Erfassungseinheit.

Die Erfindung umfasst des Weiteren eine Anordnung mit dem Sensorgehäuse, wie es soeben beschrieben wurde und einen in den Aufnahmebereich eingesteckten Sensor. Das Sensorgehäuse ist mit seiner Grundfläche an einer Innenseite eines Reifens des Rades befestigt. Insbesondere ist die Grundfläche an die Innenfläche des Reifens geklebt oder vulkanisiert.

Der Aufnahmebereich erstreckt sich weg von einer von der Grundfläche abgewandten Seite. Der Aufnahmebereich kann sich im montierten Zustand von der Radinnenseite in das Radinnere erstrecken. Der Aufnahmebereich ist bevorzugt im Querschnitt ringförmig oder vieleckig aufgebaut, insbesondere derart, dass der Aufnahmebereich in seiner Aussparung den Sensor aufnehmen kann. Umfänglich um den Aufnahmebereich ist zumindest eine Sollbruchstelle ausgebildet. Die mindestens eine Sollbruchstelle verläuft entlang des Umfangs bzw. entlang der Außenfläche des Aufnahmebereichs, insbesondere derart, dass ein oberer Teil des Aufnahmebereichs im Falle des Aufbrechens von einem unteren Teil des Aufnahmebereichs zumindest teilweise, bevorzugt komplett, abgetrennt wird. Der obere Teil des Aufnahmebereichs ist dabei benachbart zu einer Oberseite des Sensors angeordnet, wohingegen der untere Teil des Aufnahmebereichs benachbart zu der Grundfläche ausgebildet ist. Bevorzugt ist der obere Teil des Aufnahmebereichs nicht mit dem Sensor verschweißt oder verklebt sondern kraft- und/oder formschlüssig verbunden. Somit gestaltet sich die weitere zerstörungsfreie Demontage des Sensors leichter. Bevorzugt erstreckt sich die Sollbruchstelle um den kompletten Umfang. Ferner bevorzugt ist das Sensorgehäuse derart ausgebildet, dass nach dem Aufbrechen der Sollbruchstelle der Sensor komplett entnehmbar ist und nicht wieder im dann zerstörten Gehäuse befestigt werden kann. Somit lässt sich eine unsachgemäße Weiterverwendung vermeiden. Bevorzugt ist im Umfangsbereich des Aufnahmebereichs eine Lasche angeordnet, die vom Umfangsbereich abstehen kann, insbesondere derart, dass ein Monteur sie zur Demontage des Sensors greifen kann. Die Lasche kann ein integraler Bestandteil des Aufnahmebereichs sein. Insbesondere bei Herstellung des Sensorgehäuses oder des Aufnahmebereichs aus Kunststoff, kann solch eine vom Aufnahmebereich abstehende Lasche gebildet werden. Insbesondere kann entlang der Sollbruchstelle ein Faden oder ein Riemen in den Aufnahmebereich eingelegt sein, wobei dann ein Ende des Fadens oder des Riemens diese Lasche bilden kann. Der Faden oder Riemen kann ein separates Bauteil sein. Alternativ dazu kann der Riemen auch durch entsprechende Prägungen im Bereich der Sollbruchstelle integral in dem Aufnahmebereich gebildet werden.

Weitere Einzelheiten, Merkmale und Vorteile der Erfindung ergeben sich aus der nachfolgenden Beschreibung und den Figuren. Es zeigen:
- Figur 1: eine erfindungsgemäße Anordnung mit einem erfindungsgemäßen Sensorgehäuse und einem Sensor gemäß einem ersten Ausführungsbeispiel,
- Figur 2: das erfindungsgemäße Sensorgehäuse mit dem Sensor gemäß dem ersten Ausführungsbeispiel,
- Figur 3: mehrere Montageschritte zum ersten Ausführungsbeispiel,
- Figur 4: die erfindungsgemäße Anordnung mit dem erfindungsgemäßen Sensorgehäuse und dem Sensor gemäß einem zweiten Ausführungsbeispiel,
- Figur 5: das erfindungsgemäße Sensorgehäuse mit dem Sensor gemäß dem zweiten Ausführungsbeispiel, und
- Figur 6: mehrere Schritte zur Montage gemäß dem zweiten Ausführungsbeispiel.

Im Folgenden werden zwei Ausführungsbeispiele der Erfindung genauer erläutert. Gleiche bzw. funktional gleiche Bauteile sind in beiden Ausführungsbeispielen mit denselben Bezugszeiten versehen. Die Figuren zeigen die jeweiligen Anordnungen schematisch vereinfacht.

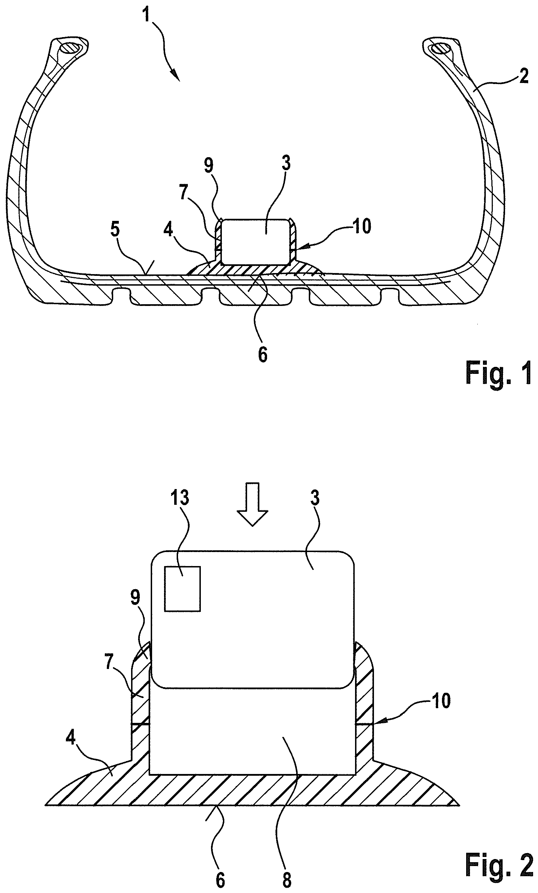

Die Figuren 1 bis 3 zeigen das erste Ausführungsbeispiel. Figur 1 zeigt eine Anordnung 1 mit einem Schnitt durch einen Reifen 2 eines Kraftfahrzeuges. Die Anordnung 1 weist einen Sensor 3 in einem Sensorgehäuse 4 auf. Figur 2 zeigt den Sensor 3 mit dem Sensorgehäuse 4 ohne Reifen 2. Durch den Pfeil ist in Figur 2 angedeutet, wie der Sensor 3 in das Sensorgehäuse 4 eingesteckt werden kann.

Das Sensorgehäuse 4 ist ein einstückiges Bauteil aus Kunststoff. Das Sensorgehäuse 4 weist eine Grundfläche 6 auf. Mit dieser Grundfläche 6 ist das Sensorgehäuse 4 an eine Innenfläche 5 des Reifens 2 geklebt oder vulkanisiert. Von der Grundfläche 6 erstreckt sich ein Aufnahmebereich 7. Dieser Aufnahmebereich 7 definiert eine Aussparung 8. In die Aussparung 8 wird der Sensor 3 eingesteckt. Die Aussparung 8 ist an ihrer Unterseite durch die Grundfläche 6 verschlossen und nach oben offen. Am oben offenen Rand weist der Aufnahmebereich 7 zumindest ein Rastelement 9 auf. Dieses Rastelement 9 ist ausgebildet, um den Sensor 3 fest in der Aussparung 8 zu halten.

Umfänglich um den Aufnahmebereich 7 ist zumindest eine Sollbruchstelle 10 ausgebildet.

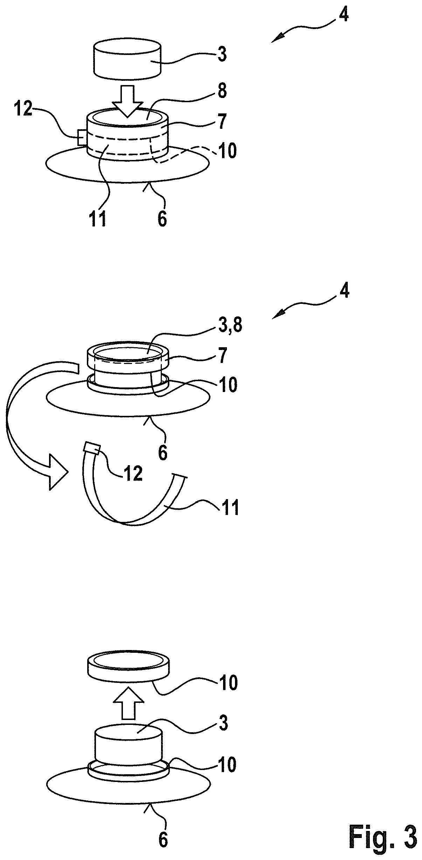

Figur 3 zeigt in drei Abbildungen die Montage und Demontage von Sensor 3 und Sensorgehäuse 4.

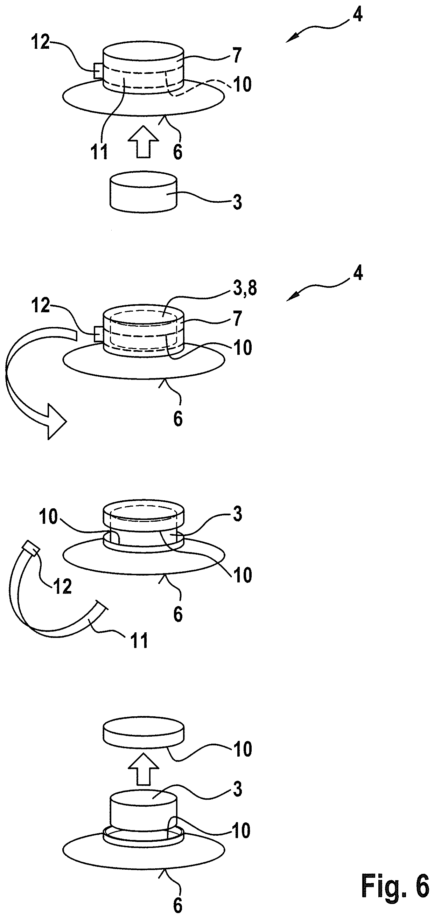

Wie Figur 3 zeigt, befindet sich am Aufnahmebereich 7 entlang der Sollbruchstelle 10 ein Riemen 11, der in eine Lasche 12 endet. Diese Lasche 12 steht vom Aufnahmebereich 7 ab und kann von einem Menschen gezogen werden. Der Riemen 11 kann ein separates Bauteil sein, das in den Aufnahmebereich 7 eingelegt ist. Alternativ dazu kann der Riemen 11 auch durch entsprechende Prägungen im Bereich der Sollbruchstelle 10 integral in dem Aufnahmebereich 7 gebildet werden.
Entscheidend ist, dass gemäß der Darstellung in Figur 3 durch Ziehen an der Lasche 12 der Aufnahmebereich 7 an der Sollbruchstelle 10 aufbricht. Dadurch wird das Sensorgehäuse 4 vollständig zerstört und der Sensor 3 kann unbeschädigt entnommen werden.

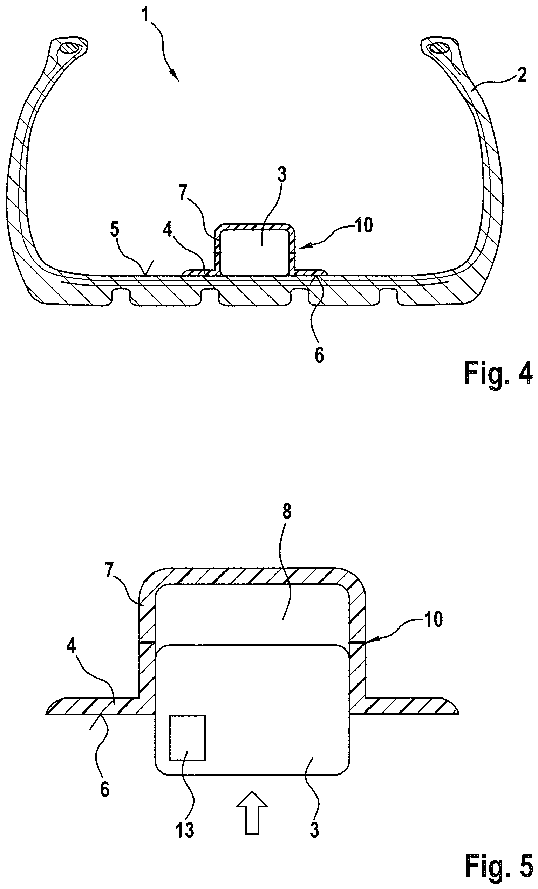

Die Figuren 4 bis 6 zeigen das zweite Ausführungsbeispiel. Im zweiten Ausführungsbeispiel ist die Aussparung 8 nach oben verschlossen und durchbricht die Grundfläche 6. Der Sensor 3 wird hier also bevor das Sensorgehäuse 4 im Reifen 2 befestigt wird in die Aussparung 8 eingeschoben. Sobald das Sensorgehäuse 4 mit seiner Grundfläche 6 auf den Reifen 2 aufgeklebt oder aufvulkanisiert ist, ist der Sensor 3 sicher in der Aussparung 8 aufgenommen.
Auch beim zweiten Ausführungsbeispiel ist gemäß Figur 6 ein Riemen 11 mit einer Lasche 12 vorgesehen. Wiederum durch Ziehen an der Lasche 12 erfolgt ein Aufbrechen des Sensorgehäuses 4, somit ein Zerstören des Sensorgehäuses 4 und eine zerstörungsfreie Entnahme des Sensors 3.
Wie in den Figuren 2 und 5 rein schematisch angedeutet ist, können die Sensoren 3 eine Erfassungseinheit 13 aufweisen. Diese Erfassungseinheiten 13 sind dazu ausgebildet, ein Aufbrechen des Aufnahmebereichs 7 zu erfassen. Dies erfolgt beispielsweise durch ein Öffnen eines elektrischen Kontakts, durch eine resistive Veränderung, durch eine kapazitive Veränderung, durch eine pneumatische Veränderung oder eine optische Veränderung beim Aufbrechen des Aufnahmebereichs 7.

### Bezugszeichenliste:

- 1: Anordnung
- 2: Reifen
- 3: Sensor
- 4: Sensorgehäuse
- 5: Innenfläche
- 6: Grundfläche
- 7: Aufnahmebereich
- 8: Aussparung
- 9: Rastelement
- 10: Sollbruchstelle
- 11: Riemen
- 12: Lasche
- 13: Erfassungseinheit

## Patentansprüche

1. Sensorgehäuse (4) zur Montage in einem Fahrzeugrad, vorzugsweise Kraftfahrzeugrad, umfassend
• eine Grundfläche (6) zum Befestigen des Sensorgehäuses (4) im Innenraum eines Rades,
• einen Aufnahmebereich (7) mit einer Aussparung (8) zur Aufnahme eines Sensors (3), und
eine Sollbruchstelle (10) zum Aufbrechen des Aufnahmebereichs (7) und somit zum Lösen des Sensors (3) aus dem Aufnahmebereich (7),
**dadurch gekennzeichnet, dass** die Sollbruchstelle (10) durch eine Materialverjüngung im Aufnahmebereich (7) gebildet ist.

2. Sensorgehäuse nach Anspruch 1, wobei die Sollbruchstelle (10) am Umfang des Aufnahmebereiches (7) ausgebildet ist.

3. Sensorgehäuse nach einem der vorhergehenden Ansprüche, **dadurch gekennzeichnet, dass** der Aufnahmebereich (7) derart zur Aufnahme des Sensors (3) ausgebildet ist, dass der Sensor (3) nur durch Zerstören, vorzugsweise Aufbrechen, des Sensorgehäuses (4) entnehmbar ist.

4. Sensorgehäuse nach Anspruch 3, wobei die Sollbruchstelle (10) und der Aufnahmebereich (7) derart ausgebildet sind, dass durch Aufbrechen an der Sollbruchstelle (10) das Sensorgehäuse (4) derart zerstört wird, dass es nicht mehr weiterverwendet werden kann.

5. Sensorgehäuse nach einem der vorhergehenden Ansprüche, wobei die Sollbruchstelle (10) entlang des Umfangs des Aufnahmebereichs (7) verläuft und derart ausgebildet ist, dass ein oberer Teil des Aufnahmebereichs (7) im Falle des Aufbrechens von einem unteren Teil des Aufnahmebereichs (7) zumindest teilweise abgetrennt wird.

6. Sensorgehäuse nach Anspruch 5, wobei der obere Teil des Aufnahmebereichs (7) nicht mit dem Sensor verschweißt oder verklebt ist, und/oder
wobei sich die Sollbruchstelle (10) um den kompletten Umfang des Aufnahmebereichs (7) erstreckt.

7. Sensorgehäuse nach einem der vorhergehenden Ansprüche, **dadurch gekennzeichnet, dass** an der Sollbruchstelle (10) eine Lasche (12) am Aufnahmereich (7) ausgebildet ist, wobei durch Ziehen an der Lasche (12) der Aufnahmebereich (7) an der Sollbruchstelle (10) aufbrechbar ist.

8. Sensorgehäuse nach Anspruch 7, **dadurch gekennzeichnet, dass** die Lasche (12) integraler Bestandteil des Aufnahmebereichs (7) ist.

9. Sensorgehäuse nach Anspruch 7, **dadurch gekennzeichnet, dass** in den Aufnahmebereich (7), vorzugsweise entlang der Sollbruchstelle (10), ein Faden oder Riemen (11) eingelegt ist, wobei ein Ende des Fadens oder Riemens (11) die Lasche (12) bildet.

10. Sensorgehäuse nach einem der vorhergehenden Ansprüche 7 bis 9, wobei die Lasche von dem Umfang des Aufnahmebereichs (7) absteht.

11. Sensorgehäuse nach einem der vorhergehenden Ansprüche, **dadurch gekennzeichnet, dass** das Sensorgehäuse (4) aus Kunststoff hergestellt ist, wobei vorzugsweise der Aufnahmebereich (7) gemeinsam mit der Grundfläche (6) ein einstückiges Bauteil bildet, und/oder
dass an der Grundfläche (6) ein Klebstoff zum Einkleben des Sensorgehäuses (4) in das Fahrzeugrad angeordnet ist, und/oder
dass die Aussparung (8) zum Einführen des Sensors (3) die Grundfläche (6) durchbricht.

12. Sensorgehäuse nach einem der vorhergehenden Ansprüche, **dadurch gekennzeichnet, dass** die Aussparung (8) an einer Seite durch die Grundfläche (6) verschlossen ist und an einer weiteren Seite zum Einführen des Sensors (3) offen ist.

13. Sensorgehäuse nach einem der vorhergehenden Ansprüche, **dadurch gekennzeichnet, dass** am Aufnahmebereich (7) zumindest ein Rastelement (9) zum formschlüssigen Halten des Sensors (3) in der Aussparung (8) ausgebildet ist, und/oder
dass der Aufnahmebereich (7) zumindest stellenweise elastisch und die Aussparung (8) entsprechend eng ist, um den Sensor (3) kraftschlüssig in der Aussparung (8) zu halten.

14. Anordnung (1) umfassend ein Sensorgehäuse (4) nach einem der vorhergehenden Ansprüche 1 bis 13 und einen in den Aufnahmebereich (7) eingesteckten Sensor (3), wobei das Sensorgehäuse (4) mit seiner Grundfläche (6) an eine Innenseite eines Reifens (2) des Rades befestigt, vorzugsweise geklebt oder vulkanisiert, ist.

## Claims

1. A sensor housing (4) for mounting in a vehicle wheel, preferably a motor vehicle wheel, comprising
• a base surface (6) for securing the sensor housing (4) in the interior of a wheel,
• a receiving region (7) with a recess (8) for receiving a sensor (3), and
a predetermined breaking point (10) for breaking open the receiving region (7) and thus for releasing the sensor (3) from the receiving region (7),
**characterised in that** the predetermined breaking point (10) is formed by a tapering of material in the receiving region (7).

2. A sensor housing according to claim 1, wherein the predetermined breaking point (10) is formed at the periphery of the receiving region (7).

3. A sensor housing according to either one of the preceding claims,
**characterised in that** the receiving region (7) is designed to receive the sensor (3) in such a way that the sensor (3) can be removed only by destroying, preferably breaking open, the sensor housing (4).

4. A sensor housing according to claim 3, wherein the predetermined breaking point (10) and the receiving region (7) are designed in such a way that, by breaking open at the predetermined breaking point (10), the sensor housing (4) is destroyed in such a way that it is not re-usable.

5. A sensor housing according to any one of the preceding claims, wherein the predetermined breaking point (10) runs along the periphery of the receiving region (7) and is designed in such a way that an upper part of the receiving region (7) is at least partially separated from a lower part of the receiving region (7) in the event that the receiving region is broken open.

6. A sensor housing according to claim 5, wherein the upper part of the receiving region (7) is not welded or adhesively bonded to the sensor,
and/or
wherein the predetermined breaking point (10) extends around the entire periphery of the receiving region (7).

7. A sensor housing according to any one of the preceding claims,
**characterised in that** a tab (12) is formed on the receiving region (7) at the predetermined breaking point (10), wherein the receiving region (7) can be broken open at the predetermined breaking point (10) by pulling on the tab (12).

8. A sensor housing according to claim 7, **characterised in that** the tab (12) is an integral part of the receiving region (7).

9. A sensor housing according to claim 7, **characterised in that** a thread or belt (11) is laid in the receiving region (7), preferably along the predetermined breaking point (10), wherein an end of the thread or belt (11) forms the tab (12).

10. A sensor housing according to any one of the preceding claims 7 to 9, wherein the tab sticks out from the periphery of the receiving region (7).

11. A sensor housing according to any one of the preceding claims,
**characterised in that** the sensor housing (4) is produced from plastic, wherein the receiving region (7) together with the base surface (6) preferably forms a one-piece component, and/or
**in that** an adhesive for gluing the sensor housing (4) in the vehicle wheel is arranged on the base surface (6), and/or
**in that** the recess (8) for insertion of the sensor (3) passes through the base surface (6).

12. A sensor housing according to any one of the preceding claims,
**characterised in that** the recess (8) is closed on one side by the base surface (6) and is open on a further side for insertion of the sensor (3).

13. A sensor housing according to any one of the preceding claims,
**characterised in that** at least one detent element (9) for holding the sensor (3) in the recess (8) in a positively engaged manner is formed on the receiving region (7), and/or
**in that** the receiving region (7), at least at specific points, is resilient and the recess (8) is suitably narrow to hold the sensor (3) in the recess (8) in a frictionally engaged manner.

14. An arrangement (1) comprising a sensor housing (4) according to any one of preceding claims 1 to 13 and a sensor (3) inserted into the receiving region (7), wherein the sensor housing (4) is secured, preferably glued or vulcanised, by means of its base surface (6) to an inner side of a tyre (2) of the wheel.

## Revendications

1. Boîtier de capteur (4) destiné à être monté dans une roue de véhicule, de préférence une roue de véhicule automobile comprenant :
- une surface de base (6) permettant de fixer le boîtier de capteur (4) dans le volume interne d'une roue,
- une zone de réception (7) comprenant un évidement (8) permettant la réception d'un capteur (3), et
- un emplacement de rupture de consigne (10) permettant la rupture de la zone de réception (7) et ainsi l'enlèvement du capteur (3) de la zone de réception (7),
**caractérisé en ce que**
l'emplacement de rupture de consigne (10) est formé par un amincissement de matériau dans la zone de réception (7).

2. Boîtier de capteur conforme à la revendication 1,
dans lequel l'emplacement de rupture de consigne (10) est formé à la périphérie de la zone de réception (7).

3. Boîtier de capteur conforme à l'une des revendications précédentes,
**caractérisé en ce que**
la zone de réception (7) est réalisée pour permettre la réception du capteur (3) de sorte que le capteur (3) ne puisse être prélevé qu'en endommageant, de préférence, en rompant le boîtier de capteur (4).

4. Boîtier de capteur conforme à la revendication 3,
dans lequel l'emplacement de rupture de consigne (10) et la zone de réception (7) sont réalisés de sorte que, suite à la rupture de l'emplacement de rupture de consigne (10), le boîtier de capteur (4) soit endommagé pour qu'il ne puisse plus être réutilisé.

5. Boîtier de capteur conforme à l'une des revendications précédentes, dans lequel l'emplacement de rupture de consigne (10) s'étend le long de la périphérie de la zone de réception (7) et est réalisé de sorte qu'en cas de rupture, la partie supérieure de la zone de réception (7) soit séparée au moins partiellement de la partie inférieure de la zone de réception (7).

6. Boîtier de capteur conforme à la revendication 5,
dans lequel la partie supérieure de la zone de réception (7) n'est pas soudée ou collée au capteur, et/ou
l'emplacement de rupture de consigne (10) s'étend sur la totalité de la périphérie de la zone de réception (7).

7. Boîtier de capteur conforme à l'une des revendications précédentes,
**caractérisé en ce que**
sur l'emplacement de rupture de consigne (10) de la zone de réception (7), est formée une languette (12) la zone de réception (7) pouvant être rompue au niveau de l'emplacement de rupture de consigne (10) en tirant sur la languette (12).

8. Boîtier de capteur conforme à la revendication 7,
**caractérisé en ce que**
la languette (12) est un composant de la zone de réception (7).

9. Boîtier de capteur conforme à la revendication 7,
**caractérisé en ce qu'**
un fil ou une courroie (11) est inséré dans la zone de réception (7), de préférence le long de l'emplacement de rupture de consigne (10), l'extrémité du fil ou de la courroie (11) formant la languette (12).

10. Boîtier de capteur conforme à l'une des revendications précédentes 7 à 9,
dans lequel la languette s'écarte de la périphérie de la zone de réception (7).

11. Boîtier de capteur conforme à l'une des revendications précédentes,
**caractérisé en ce qu'**
il est réalisé en un matériau synthétique, et de préférence, la zone de réception (7) forme un élément en une seule pièce avec la surface de base (6), et/ou
sur la surface de base (6) est positionné un adhésif pour permettre de coller le boîtier de capteur (4) dans la roue du véhicule, et/ou l'évidement (8) d'insertion du capteur (3) passe au travers de la surface de base (6).

12. Boîtier de capteur conforme à l'une des revendications précédentes,
**caractérisé en ce que**
l'évidement (8) est fermé sur un côté par la surface de base (6) et est ouvert sur un autre côté pour permettre l'insertion du capteur (3).

13. Boîtier de capteur conforme à l'une des revendications précédentes,
**caractérisé en ce que**
dans la zone de réception (7) est formé, au moins un élément d'encliquetage (9) pour permettre de maintenir le capteur (3) dans l'évidement (8) par une liaison par la forme, et/ou
la zone de réception (7) est élastique au moins par zones et l'évidement (8) est suffisamment étroit pour permettre de maintenir le capteur (3) dans l'évidement (8) par une liaison par la force.

14. Agencement (1) comprenant un boîtier de capteur (4) conforme à l'une des revendications précédentes 1 à 13 et un capteur (3) enfiché dans la zone de réception (7), le boîtier de capteur (4) étant fixé par sa surface de base (6) sur la face interne d'un pneumatique (2) de roue, et de préférence collé ou vulcanisé.
